# EUROPEAN PATENT APPLICATION

(11) **EP 3 351 098 A1**
(43) Date of publication of application: **25.07.2018**
(21) Application number: 15903783.7
(22) Date of filing: 02.11.2015
(51) Int. Cl.: A01M 1/04

(54) **MOSQUITO KILLER LAMP**

(30) Priority: 15.09.2015 CN 201520712890 U
(71) Applicant: Ningbo Dayang Industry And Trade Co., Ltd, Ningbo, Zhejiang 315033 (CN)
(72) Inventor: ZHENG, Jun, Ningbo Zhejiang 315033 (CN); NING, Yuan'ai, Ningbo Zhejiang 315033 (CN)
(74) Representative: Viering, Jentschura & Partner mbB Patent- und Rechtsanwälte
(86) International application number: PCT/CN2015/000745
(87) International publication number: WO 2017/045092

(57) **Abstract**

A mosquito killer lamp having a lamp base (1), an illumination component (2), a mosquito killer device (3), a connection base (4), and a circuit board arranged in the lamp base (1) and comprising an illumination control circuit board (51) and a mosquito killer control circuit board (52). The illumination component (2) is arranged at a bottom of the connection base (4), and electrically connected to the illumination control circuit board (51). The mosquito killer device (3) is arranged in the connection base (4), and electrically connected to the mosquito killer control circuit board (52). The mosquito killer lamp can replace a conventional lamp for use in an original circuit without making any change to the original circuit and switch control, while having functions of killing mosquitos and lighting.

## Description

### TECHNICAL FIELD OF THE INVENTION

The present invention relates to a light bulb, and more specifically relates to a mosquitocidal light bulb which can achieve both the functions of illumination and mosquito killing.

### BACKGROUND OF THE INVENTION

Since winged insects, bugs, mosquitoes and the like are often being attracted by lights, flocks of flying insects may often be found in places where lights are present. To avoid bites from these insects and to avoid a flock of these insects from gathering at one place, various kinds of mosquitocidal light equipment have been invented. For example, a light specifically used for killing mosquitoes uses lights to attract insects and to kill them by a high voltage electric net as the insects hit the net. Other measures may include providing a small fan, a piece of mosquito repellent incense or a layer of adhesives on the table lamp.

Among these measures and devices, mosquitocidal light is the safest and the most environmental friendly. No toxic gas will be produced during the use of mosquitocidal light. However, the use of mosquitocidal light means additional provision of a specified equipment only for killing mosquitoes. Accordingly, additional investment is required. Furthermore, the mosquitocidal light requires hanging and mounting, which consume time and energy.

### BRIEF SUMMARY OF THE INVENTION

In view of the aforesaid disadvantages now present in the prior art, the present invention provides a mosquitocidal light bulb which can kill insects and which can be directly connected with an existing light bulb seat.

The present invention provides the following technical scheme: A mosquitocidal light bulb, comprising a light bulb seat and lighting elements, wherein the mosquitocidal light bulb also comprises a connecting seat having a cavity and a top part thereof connected with the light bulb seat, and circuit boards and a mosquitocidal device disposed inside the cavity of the connecting seat. The circuit boards comprise a lighting control circuit board and a mosquito killing control circuit board; the lighting control circuit board and the mosquito killing control circuit board are both electrically connected with the light bulb seat.

The lighting elements are provided at a bottom part of the connecting seat; the lighting elements are electrically connected with the lighting control circuit board.

The mosquitocidal device is electrically connected with the mosquito killing control circuit board.

Preferably, the connecting seat comprises a first connecting seat at a top part of the connecting seat, a second connecting seat at a bottom part of the connecting seat, and a fencing element disposed between the first connecting seat and the second connecting seat.

The fencing element comprises fence panels mutually spaced with respect to one another and disposed annularly to form a hollowed center.

The mosquito killing control circuit board is connected with the first connecting seat; the mosquitocidal device is disposed inside the fencing element; the mosquitocidal device is secured to the first connecting seat by connecting with the mosquito killing control circuit board.

The lighting elements and the lighting control circuit board are connected with the second connecting seat.

Further, an insulation tube for accommodating wires is provided between the second connecting seat and the first connecting seat; the lighting control circuit board is electrically connected with the light bulb seat via the wires.

To facilitate the use of the present mosquitocidal light bulb along the existing wire arrangement, the lighting control circuit board and the mosquito killing control circuit board are electrically connected with a trigger; the trigger is electronically connected with the light bulb seat. The trigger is designed such that the same trigger in the existing wire arrangement can achieve lighting function, mosquito killing function or combined lighting and mosquito killing functions.

Preferably, the fencing element and the first connecting seat form a one whole piece; a lower side of the second connecting seat is removably connected with a light shade that covers the lighting elements. The light shade facilitate protection and replacement of the lighting elements.

In each embodiment, the mosquitocidal device can be any type available in the prior arts. Preferably, the mosquitocidal device comprises a high voltage electric net and insect attracting lights; the insect attracting lights are provided on the mosquito killing control circuit board; the high voltage electric net has an annular shape with a hollowed center, and surrounds the insect attracting lights; an upper end of the high voltage electric net is secured to the first connecting seat via the mosquito killing control circuit board.

More preferably, the high voltage electric net may comprise a first connecting ring and a second connecting ring; a plurality of conductive rods mutually spaced with respect to one another are provided between the first connecting ring and the second connecting ring.

To facilitate the discharge of the dead insects out of the electric net, the second connecting seat may be designed to have a conical shape; the insulation tube is connected with a vertex of the second connecting seat; dead bodies of the insects when fallen on the second connecting seat will automatically slide down the tapered surface of the second connecting seat due to pulling of their own weights, and then out of the high voltage electric net through the gaps between the high voltage electric net and the gaps between the fence panels of the fencing element.

Discharging the dead insects can prevent awful smells of accumulated insect dead bodies.

Preferably, the lighting elements may be formed by a plurality of LEDs.

Compared with the prior arts, the mosquitocidal light bulb provided by the present invention can directly replace the ordinary light bulb functioning on existing wire arrangement. Therefore, it is not necessary to change the existing wire arrangement and switch controls. Moreover, the present invention provides both mosquito killing function and lighting function.

### BRIEF DESCRIPTION OF THE DRAWINGS

FIG. 1 is a perspective structural view of the present invention.
FIG. 2 is an exploded view of the present invention.

### DETAILED DESCRIPTION OF THE INVENTION

The present invention is described further in detail below with reference to an embodiment illustrated in the accompanying drawings.

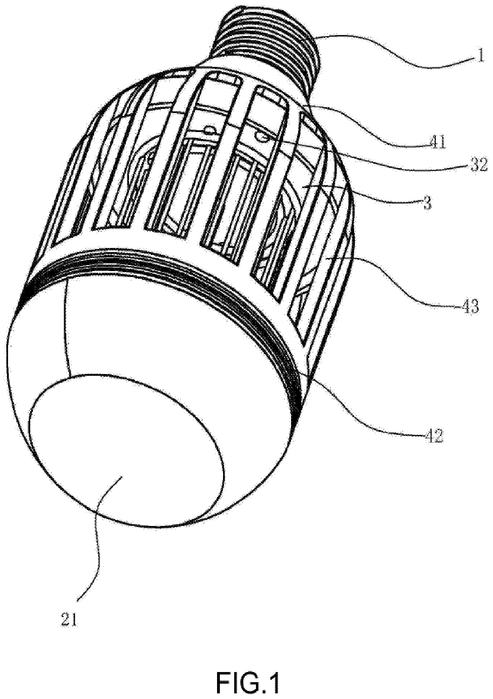

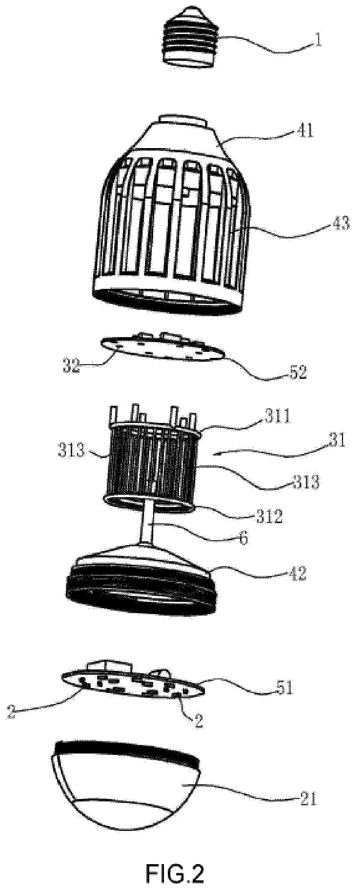

FIGs. 1-2 shows a preferred embodiment of the present invention. A mosquitocidal light bulb of the present invention comprises a light bulb seat 1, lighting elements 2, a mosquitocidal device 3, a connecting seat 4, circuit boards and a trigger.

The circuit boards comprise a lighting control circuit board 51 and a mosquito killing control circuit board 52. The lighting control circuit board 51 and the mosquito killing control circuit board 52 are both electrically connected with the light bulb seat 1.

The light bulb seat 1 is an ordinary light bulb seat available nowadays.The light bulb seat can be threaded or provided with a snap-fit structure for connection with a mouth of a light bulb.

The connecting seat 4 has a cavity, and comprises a first connecting seat 41 at a top part of the connecting seat 4, a second connecting seat 42 at a bottom part of the connecting seat 4, and a fencing element 43 disposed between the first connecting seat 41 and the second connecting seat 42.

A top part of the first connecting seat 4 is connected with the light bulb seat 1. The mosquito killing control circuit board 52 and the trigger (not shown in the figures) are provided inside the first connecting seat 41.

The fencing element 43 comprises vertically arranged fence panels mutually spaced with respect to one another and disposed annularly to form a hollowed center. The hollowed fencing element 43 defines a main part of the cavity of the connecting seat 4.

The second connecting seat 42 is disposed below the fencing element 43 and has a substantially conical shape. The first connecting seat 41 and the second connecting seat 42 are mutually connected via the fencing element 43.

In the present embodiment, the fencing element 43 and the first connecting seat 41 are formed as a one whole piece. The second connecting seat 42 is connected to a bottom part of the fencing element 43 by threaded connection.

An insulation tube 6 is provided between the first connecting seat 41 and the second connecting seat 42; the insulation tube 6 is connected between a vertex of the second connecting seat 42 and the first connecting seat 41; in other words, the insulation tube 6 passes through the hollowed center of the fencing element 43 and is connected between the first connecting seat and the second connecting seat.

The lighting control circuit board 51 is provided inside the second connecting seat 42; the lighting control circuit board 51 is electrically connected to the trigger (not shown in the figures) inside the first connecting seat 41 via wires (not shown in the figures) inside the insulation tube 6; the trigger is electrically connected with the light bulb seat 1.

The lighting elements 2 comprises a plurality of LEDs mutually spaced with respect to one another and mounted on the lighting control circuit board 51, and are electronically connected with the lighting control circuit board 51. The lighting elements 2 and the lighting control circuit board 51 are connected with the second connecting seat 42. In this embodiment, a light shade 21 is connected with the second connecting seat 42 by threaded connection to facilitate replacement of the lighting elements 2.

The mosquitocidal device 3 is entirely disposed inside the fencing element 43. The mosquitocidal device 3 comprises a high voltage electric net 31 and insect attracting lights 32; the high voltage electric net 31 and the insect attracting lights 32 are electrically connected with the mosquito killing control circuit board 52. The insect attracting lights 32 are disposed on the mosquito killing control circuit board 52.

The high voltage electric net 31 has an annular shape and a hollowed center. The high voltage electric net 31 surrounds the insect attracting lights 32. An upper end of the high voltage electric net 31 is secured to the first connecting seat 4 by mechanical connection (and thus achieving electrical connection) with the mosquito killing control circuit board 52.

The high voltage electric net 31 comprises a first connecting ring 311, a second connecting ring 312, and conductive rods 313 mutually spaced with respect to one another provided between the first connecting ring 311 and the second connecting ring 312.

The mosquitocidal light bulb of the present invention has the following working principle:
When lighting is required, press a switch (not shown in the figures) once to trigger a first trigger of the trigger so as to close a lighting control circuit. Accordingly, the LEDs will be lighted up to provide lighting.

When it is necessary to enable mosquito killing function when the light bulb is lighted up, press the switch again to trigger a second trigger of the trigger. Accordingly, the lighting control circuit and also a mosquito killing circuit are closed simultaneously. The insect attracting lights and the lighting elements are lighted up simultaneously so as to attract insects by using the insect attracting lights and at the same time provide ordinary lighting function. When insects touch the high voltage electric net, they will be killed by the high voltage electricity. The dead bodies of the insects fall onto the second connecting seat and slide along the tapered surface of the second connecting seat and out of the high voltage electric net through the gaps on the high voltage electric net and the gaps between the fence panels of the fencing element.

When lighting is no longer required, press the switch to trigger a third trigger of the trigger to cut off the lighting control circuit. The mosquito killing circuit in this condition is still closed.

When the switch is pressed for the fourth time to trigger a fourth trigger of the triggeboth the lighting control circuit and the mosquito killing circuit will be cut off.

## Claims

1. A mosquitocidal light bulb, comprising a light bulb seat (1) and lighting elements (2), wherein the mosquitocidal light bulb also comprises a connecting seat (4) having a cavity and a top part thereof connected with the light bulb seat (1), and circuit boards and a mosquitocidal device (3) disposed inside the cavity of the connecting seat (4);
the circuit boards comprise a lighting control circuit board (51) and a mosquito killing control circuit board (52); the lighting control circuit board and the mosquito killing control circuit board are both electrically connected with the light bulb seat (1);
the lighting elements (2) are provided at a bottom part of the connecting seat (4); the lighting elements (2) are electrically connected with the lighting control circuit board (51);
the mosquitocidal device (3) is electrically connected with the mosquito killing control circuit board (52).

2. The mosquitocidal light bulb as in claim 1, wherein the connecting seat (4) comprises a first connecting seat (41) at a top part of the connecting seat (4), a second connecting seat (42) at a bottom part of the connecting seat (4), and a fencing element (43) disposed between the first connecting seat (41) and the second connecting seat (42);
the fencing element (43) comprises fence panels mutually spaced with respect to one another and disposed annularly to form a hollowed center;
the mosquito killing control circuit board (52) is connected with the first connecting seat (41); the mosquitocidal device (3) is disposed inside the fencing element (43); the mosquitocidal device is secured to the first connecting seat (41) by connecting with the mosquito killing control circuit board (52);
the lighting elements (2) and the lighting control circuit board (51) are connected with the second connecting seat (42).

3. The mosquitocidal light bulb as in claim 2, wherein an insulation tube (6) for accommodating wires is provided between the second connecting seat (42) and the first connecting seat (41); the lighting control circuit board (51) is electrically connected with the light bulb seat (1) via the wires.

4. The mosquitocidal light bulb as in claim 1, wherein the lighting control circuit board (51) and the mosquito killing control circuit board (52) are electrically connected with a trigger; the trigger is electronically connected with the light bulb seat (1).

5. The mosquitocidal light bulb as in claim 2, wherein the fencing element (43) and the first connecting seat (41) form a one whole piece; a lower side of the second connecting seat (42) is removably connected with a light shade (21) that covers the lighting elements (2).

6. The mosquitocidal light bulb as in any one of claims 2-5, wherein the mosquitocidal device (3) comprises a high voltage electric net (31) and insect attracting lights (32); the insect attracting lights (32) are provided on the mosquito killing control circuit board (52); the high voltage electric net (31) has an annular shape with a hollowed center, and surrounds the insect attracting lights (32); an upper end of the high voltage electric net (31) is secured to the first connecting seat (4) via the mosquito killing control circuit board (52).

7. The mosquitocidal light bulb as in claim 6, wherein the high voltage electric net (31) comprises a first connecting ring (311) and a second connecting ring (312); a plurality of conductive rods (313) mutually spaced with respect to one another are provided between the first connecting ring (311) and the second connecting ring (312).

8. The mosquitocidal light bulb as in claim 7, wherein the second connecting seat (42) has a conical shape; the insulation tube (6) is connected with a vertex of the second connecting seat.

9. The mosquitocidal light bulb as in claim 8, wherein the lighting elements (2) are formed by a plurality of LEDs.
